**Europäisches Patentamt**

**European Patent Office**

**Office européen des brevets**

(11) Veröffentlichungsnummer: **0 351 638 B1**

(12) **EUROPÄISCHE PATENTSCHRIFT**

(45) Veröffentlichungstag der Patentschrift:
06.11.91 Patentblatt 91/45

(51) Int. Cl.⁵: **G01P 21/02**

(21) Anmeldenummer: **89112221.0**

(22) Anmeldetag: **04.07.89**

(54) Verfahren zur Überwachung von phasenverschobenen, mit einem konstanten Bereich versehenen Phasenspannungen eines mehrphasigen Tachogenerators auf Phasenausfall und Schaltungsanordnung zur Durchführung des Verfahrens.

(30) Priorität: **19.07.88 DE 3824591**

(43) Veröffentlichungstag der Anmeldung:
**24.01.90 Patentblatt 90/04**

(45) Bekanntmachung des Hinweises auf die Patenterteilung:
**06.11.91 Patentblatt 91/45**

(84) Benannte Vertragsstaaten:
**AT DE FR GB IT**

(56) Entgegenhaltungen:
**US-A- 3 673 422**

(56) Entgegenhaltungen:
**PATENT ABSTRACTS OF JAPAN, Band 10, Nr. 173 (P-469)[2229], 18. Juni 1986; JP-A-61 023 972 (TOYODA JIDO SHOKKI SEISAKUSHO K.K.) 01-02-1986**
**IBM TECHNICAL DISCLOSURE BULLETIN, Band 18, Nr. 9, Februar 1976, Seiten 2790-2791, New York, US; E.C. PISCIOTTA: "Two-phase capstan tachometer check"**

(73) Patentinhaber: **SIEMENS AKTIENGESELLSCHAFT**
**Wittelsbacherplatz 2**
**W-8000 München 2 (DE)**

(72) Erfinder: **Vogt, Hartmut, Dipl.-Ing.**
**Anna-Hermann-Strasse 34**
**W-8522 Herzogenaurach (DE)**
Erfinder: **Reuss, Ekkehard**
**Anschützstrasse 12**
**W-8520 Erlangen (DE)**

## Beschreibung

Die Erfindung bezieht sich auf ein Verfahren zur Überwachung von phasenverschobenen, über bestimmte Bereiche Konstanten Phasenspannungen eines mehrphasigen Tachogenerators auf Phasenausfall, wobei der Tachogenerator mit einem Rotorlagegeber verbunden ist und diese Phasenspannungen mittels eines Summiergliedes zu einer Hilfsspannung summiert sind, und Schaltungsanordnung zur Durchführung des Verfahrens.

Im Handel sind stromrichtergespeiste mehrphasige Antriebsmaschinen, beispielsweise stromrichtergespeiste, dreiphasige Synchronmaschinen, erhältlich, die mit einem Tachogenerator und einem Rotorlagegeber versehen sind. Dabei werden aus den Phasenspannungen des Tachogenerators eine drehzahlproportionale Spannung erzeugt, die einem Drehzahlregler mit unterlagerter Stromregelung zugeführt wird. Der Rotorlagegeber erzeugt ein Rotorlagesignal, auch Kommutierungssignal genannt, das einer Auswahllogikschaltung des Stromrichters zugeführt wird. Wenn zu irgendeinem Zeitpunkt infolge eines Kurzschlusses im Tachogenerator wenigstens eine Phase des mehrphasigen Tachogenerators ausfällt, wird die drehzahlproportionale Spannung nur noch aus den Phasenspannungen der Phasen vermindert um wenigstens eine Phase gebildet, wodurch der gebildete Drehzahl-Istwert nicht mehr mit dem tatsächlichen Drehzahl-Istwert der Antriebsmaschine übereinstimmt. Daraus können sich Steuerungsschwierigkeiten ergeben, die dazu führen, daß die Arbeitsmaschine abgeschaltet werden muß. Außerdem erwärmt sich durch den Kurzschluß bzw. den Kurzschlußstrom im Tachogenerator dieser. Wenn nun diese Antriebsmaschine in einem explosionsgefährdeten Raum installiert ist, darf die Oberflächentemperatur des Tachogenerators eine vorbestimmte Temperatur nicht überschreiten.

Der Erfindung liegt nun die Aufgabe zugrunde, ein Verfahren zur Überwachung von phasenverschobenen, über bestimmte Bereiche Konstanten Phasenspannungen eines mehrphasigen Tachogenerators auf Phasenausfall und eine Schaltungsanordnung zur Durchführung des Verfahrens anzugeben, wodurch eine Verfälschung des Drehzahl-Istwertes bzw. eine Erwärmung der Oberflächentemperatur des Tachogenerators verhindert wird.

Diese Aufgabe wird erfindungsgemäß dadurch gelöst, daß zu jedem durch ein vom Rotorlagegeber erzeugtes Rotorlagesignal bestimmten Kommutierungszeitpunkt die Hilfsspannung während einer vorbestimmten Meßzeit abgetastet und dieser Abtastspannungswert mit einem vorbestimmten Spannungswertebereich verglichen wird, wobei eine Anzeige "Fehler Tacho" angesteuert wird, sobald ein Abtastspannungswert außerhalb des vorbestimmten Spannungswertebereichs liegt. Aufgrund dieser Verfahrensschritte kann man zu den Kommutierungszeitpunkten, d.h. alle 60° el. bzw. alle 20° mech. die Phasenspannungen abfragen und feststellen, ob alle Phasenspannungen noch am Ausgang des Tachogenerators anstehen. Wenn nun beispielsweise zwischen zwei Kommutierungszeitpunkten ein Kurzschluß auftritt, wodurch wenigstens eine Phasenspannung ausfällt, wird dies bei dem nächsten Abtastzeitpunkt anhand eines Vergleichs des Abtastspannungswertes mit einem Spannungswertebereich festgestellt. Diesen Fehler kann man nun optisch anzeigen und/oder einem Mikroprozessor einer Prozeßsteuerung zuführen, um ihn zu protokollieren. Somit ist es möglich, mit Hilfe der aus den Phasenspannungen erzeugten Hilfsspannung die Phasenspannungen des Tachogenerators auf Spannungsausfall zu überwachen, wodurch Fehler in der Steuerung und eine Erhöhung der Oberflächentemperatur des Tachogenerators verhindert werden können.

Bei einer Schaltungsanordnung zur Durchführung des Verfahrens, wobei die Hilfsspannung am Ausgang eines Summierglieds ansteht, deren Eingänge jeweils mit einer Phasenspannung beaufschlagt sind, steht die Hilfsspannung über ein Schaltelement am Eingang eines Grenzwertgebers an, dessen Ausgang ein Speichermittel triggert, dem eine Anzeige "Fehler Tacho" nachgeschaltet ist, und ist das Schaltelement mittels einer flankengesteuerten monostabilen Kippschaltung vom Rotorlagesignal steuerbar.

Durch den Aufbau dieser Schaltungsanordnung kann man mit einfachen Mitteln zu jedem Kommutierungszeitpunkt die Hilfsspannung ab tasten und den Abtastspannungswert mit einem Spannungswertebereich vergleichen, wobei die Anzeige "Fehler Tacho" angesteuert wird, wenn der Abtastspannungswert außerhalb dieses Spannungswertebereichs liegt. Somit kann man einen Fehler, der zwischen zwei Kommutierungszeitpunkten auftritt, wodurch dann wenigstens eine Phasenspannung ausfällt, bei der anschließenden Abtastung der Hilfsspannung feststellen.

Durch die abhängigen Ansprüche 3 bis 6 werden spezielle Schaltungsteile der genannten Schaltungsanordnung beansprucht, wodurch eine Ausführungsform der allgemeinen Schaltungsanordnung angegeben wird.

Zur weiteren Erläuterung der Erfindung wird auf die Zeichnung Bezug genommen, in der ein Ausführungsbeispiel nach der Erfindung schematisch veranschaulicht ist.

FIG 1   zeigt ein Blockschaltbild der Schaltungsanordnung zur Durchführung des erfindungsgemäßen Verfahrens, in

FIG 2   ist eine Schlatung einer flankengesteuerten monostabilen Kippschaltung der Schaltungsanordnung

| | | |
|---|---|---|
| | | nach FIG 1 dargestellt, in |
| FIG 3 | | ist eine Schaltung eines Fensterkomparators mit einem Schaltelement der Schaltungsanordnung nach FIG 1 dargestellt, die |
| FIG 4 | | veranschaulicht eine Schaltung eines Speichermittels der Schaltungsanordnung nach FIG 1, in |
| FIG 5 | | sind die Phasenspannungen eines Tachogenerators in einem Diagramm über der Kreisfrequenz $\omega t$ dargestellt, in |
| FIG 6 | | ist die Hilfsspannung in einem Diagramm über der Kreisfrequenz $\omega t$ dargestellt, in |
| FIG 7 | | ist das Rotorlagesignal in einem Diagramm über der Kreisfreqeunz $\omega t$ veranschaulicht, in |
| FIG 8 | | ist das Trigger-Abtastsignal in einem Diagramm über der Kreisfrequenz $\omega t$ dargestellt und in den |
| FIG 9 | | bis 12 sind die Phasenspannungen des Tachogenerators, die Hilfsspannung, das Rotorlagesignal und das Trigger-Abtastsignal jeweils in einem Diagramm über der Kreisfrequenz $\omega t$ für den Fall einer Störung im Tachogenerator dargestellt. |

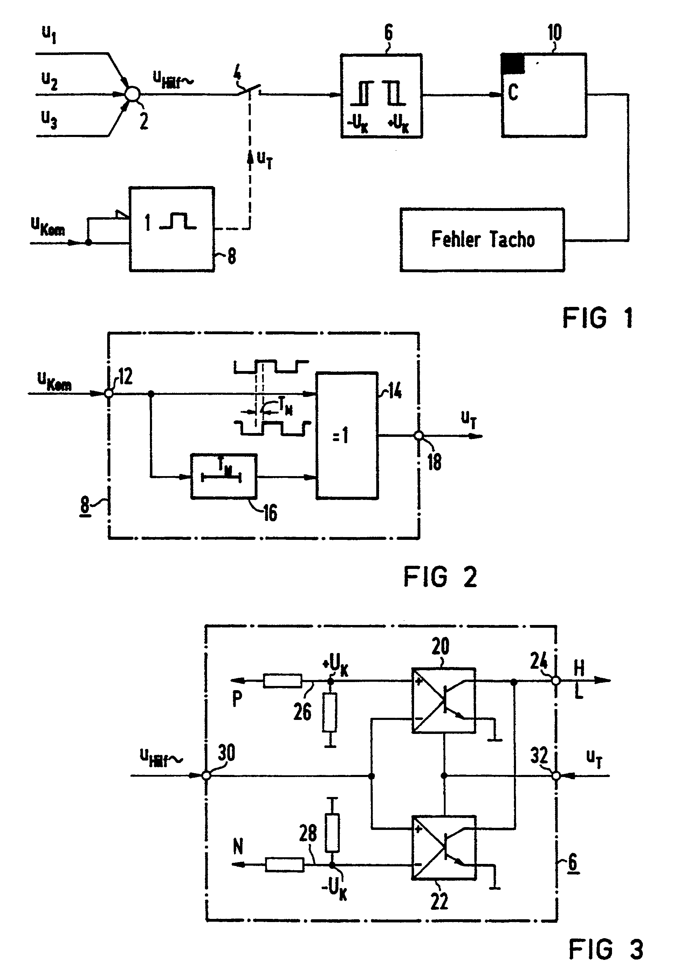

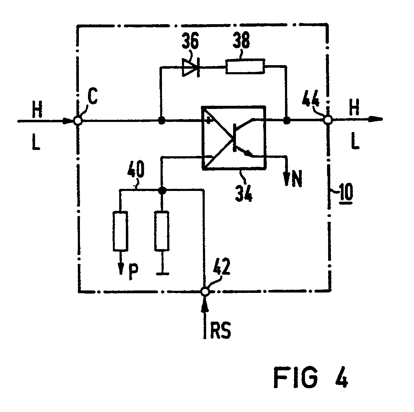

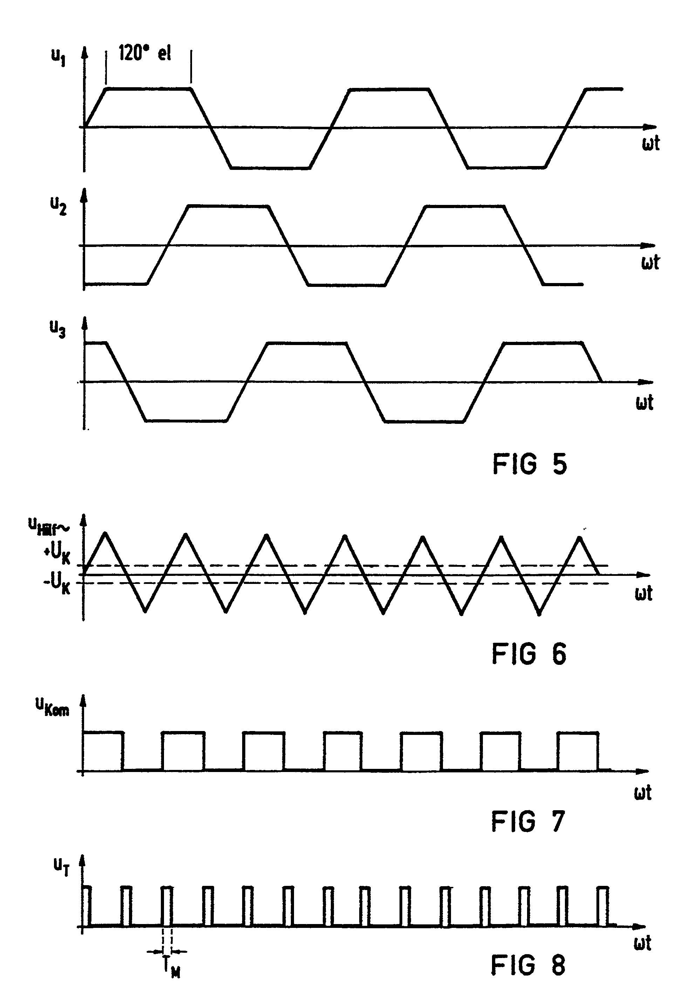

Die FIG 1 zeigt ein Blockschaltbild einer Schaltungsanordnung zur Durchführung des Verfahrens zur Überwachung von phasenverschobenen mit einem konstanten Bereich versehenen Phasenspannungen $u_1$, $u_2$ und $u_3$ eines mehrphasigen Tachogenerators auf Phasenausfall. Dieser konstante Bereich ist größer als 60° el. und kleiner als 180° el.. Dieser Tachogenerator und ein Rotorlagegeber sind mit einem Läufer einer mehrphasigen Antriebsmaschine gekuppelt. Aus Übersichtlichkeitsgründen ist der Tachogenerator, der Rotorlagegeber und die Arbeitsmaschine nicht dargestellt. Der Tachogenerator weist eine in ihrer Phasenzahl mit der Phasenzahl der Arbeitsmaschine übereinstimmende mehrphasige Ständerwicklung auf und ist so ausgelegt, daß in jeder Phase der Ständerwicklung des Tachogenerators eine zumindest über einem bestimmten Winkelbereich konstant verlaufende Spannung induziert ist und die Winkelbereiche, in denen die einzelnen Phasenspannungen von der einen zu der anderen Polarität wechseln, sich untereinander zeitlich überlappen können. In Übereinstimmung mit der dreiphasigen Ständerwicklung der Antriebsmaschine hat auch der Tachogenerator eine dreiphasige Wicklung, deren Phasenspannungen $u_1$, $u_2$ und $u_3$ jeweils in einem Diagramm über der Kreisfrequenz $\omega t$ in der FIG 5 dargestellt sind. Diese Phasenspannungen $u_1$, $u_2$ und $u_3$, die jeweils an einem Eingang eines Summiergliedes 2 anstehen, werden zu einer Hilfsspannung $u_{Hll}$ ~summiert. Die am Ausgang des Summiergliedes 2 anstehende Hilfsspannung $u_{Hllf}$ ~wird über ein Schaltelement 4 einem Grenzwertgeber 6 zugeführt. Das Schaltelement 4 wird mittels einer flankengesteuerten monostabilen Kippschaltung 8 von einem Rotorlagesignal $u_{Kom}$ ist in einem gesteuert, wobei das Rotorlagesignal $u_{Kom}$ vom Rotorlagegeber der Antriebsmaschine erzeugt wird. Das Rotorlagesignal $U_{Kom}$ ist in einem Diagramm über der Kreisfrequenz $\omega t$ in FIG 7 dargestellt. Einen genauen Aufbau des Grenzwertgebers 6, beispielsweise ein Fensterkomparator, ist in FIG 3 im einzelnen dargestellt. Ebenfalls ist ein Aufbau der flankengesteuerten monostabilen Kippschaltung 8 im einzelnen in der FIG 2 dargestellt. Der Ausgang des Grenzwertgebers 6 ist mit einem Clock-Eingang C eines Speichermittels 10 verknüpft, dem eine Anzeige "Fehler Tacho" nachgeschaltet ist. Einen näheren Aufbau des Speichermittels 10 ist der FIG 4 zu entnehmen. Am Ausgang des Grenzwertgebers 6 erscheint entweder ein High-Signal oder ein Low-Signal, wodurch vom Grenzwertgeber 6 zu erkennen gegeben wird, daß der Spannungswert der Hilfsspannung $u_{Hllf}$ ~am Eingang des Grenzwertgebers 6 entweder innerhalb oder außerhalb eines eingestellten Spannungswertebereichs liegt. Durch Anstehen eines High-Pegels am Ausgang des Spiechermittels 10 wird die Anzeige "Fehler Tacho" angesteuert.

In FIG 2 ist eine Ausführungsform der flankengesteuerten monostabilen Kippschaltung 8 nach FIG 1 im einzelnen dargestellt. Am Eingang 12 liegt das Rotorlagesignal $u_{Kom}$ an, das einem ersten Eingang eines EXOR-Gatters 14 und über ein Zeitglied 16 einem zweiten Eingang des EXOR-Gatters 14 zugeführt wird. Am Ausgang 18 des EXOR-Gatters 14 steht ein Trigger-Abtastsignal $u_T$ an. Dieses Trigger-Abtastsignal $u_T$ ist in einem Diagramm über der Kreisfrequenz $\omega t$ in FIG 8 dargestellt. Das Zeitglied 16 bewirkt eine zeitliche Verschiebung des Rotorlagesignals $u_{Kom}$ um eine Zeit $T_M$. Diese Zeit $T_M$ wird auch Abtastzeit $T_M$ genannt. Am Ausgang 18 des EXOR-Gatters 14 erscheint solange ein High-Signal, solange an einem Eingang ein High-Signal und am anderen Eingang ein Low-Signal anstehen. Somit erhält man zu Beginn jeder Flanke des Rotorlagesignals $U_{Kom}$ ein High-Signal, das jeweils für die Abtastzeit $T_M$ auf High-Pegel liegen bleibt. Während dieses Trigger-Abtastsignal $u_T$ auf High-Pegel ist, wird das Schaltelement 4 nach FIG 1 geschlossen.

In der FIG 3 ist eine Ausführungsform des Grenzwertgebers 6 mit integriertem Schaltelement 4 nach FIG 1 im einzelnen dargestellt. Als Grenzwertgeber 6 ist beispielsweise ein Fensterkomparator dargestellt, der beispielsweise aus U. Tietze, Ch. Schenk, "Halbleiter-Schaltungstechnik", 6. Auflage, 1983, Seite 180, bekannt ist. Der Fensterkomparator enthält zwei Komparatoren 20 und 22, deren Ausgänge einem gemeinsamen Ausgang 24 des Grenzwertgebers 6 bilden. Der nichtinvertierende bzw. invertierende Eingang des Komparators 20 bzw. 22 ist mit einem Ausgang eines Spannungsteilers 26 bzw. 28 verknüpft, wobei am Ausgang des Spannungsteilers 26 bzw. 28 ein Spannungswert $+ U_K$ bzw. $- U_K$ ansteht. Die Hilfsspannung $u_{Hllf}$ ~gelangt über den Eingang 30 des Grenzwertgebers 6 an den invertierenden Eingang des Komparators 20 und an den nich-

3

tinvertierenden Eingang des Komparators 22. Über einen Trigger-Eingang 32 des Grenzwertgebers 6 wird den Komparatoren 20 und 22 jeweils das Trigger-Abtastsignal $u_T$ zugeführt. Das Schaltelement 4 ist dadurch realisiert, daß die Komparatoren 20 und 22 aktiviert werden, während das Trigger-Abtastsignal $u_T$ High-Pegel hat. Somit kann man mit dieser Ausführungsform des Grenzwertgebers 6 feststellen, ob die Hilfsspannung $u_{Hilf}$ ~ jeweils während der Abtastzeit inerhalb oder außerhalb des Spannungswertebereichs $+ U_K$ und $- U_K$ liegt.

In FIG 4 ist eine Ausführungsform des Speichermittels 10 nach FIG 1 dargestellt. Als Speichermittel 10 ist ein Komparator 34 vorgesehen, dessen nichtinvertierender Eingang über eine Reihenschaltung, bestehend aus einer Diode 36 und einem Widerstand 38 mit seinem Ausgang und dessen invertierender Eingang mit einem Spannungsteiler 40 und einem Reset-Eingang 42 verknüpft sind. Der nichtinvertierende Eingang des Komparators 34 ist mit einem Clock-Eingang C des speichermittels 10 verknüpft. Aus Ausgang 44 des Speichermittels 10 erhält man ein High-Signal oder ein Low-Signal in Abhängigkeit eines anstehenden Eingangssignals. Wenn am Eingang C ein Low-Signal ansteht, dann geht der Ausgang des Komparators 34 auch in den Low-Zustand, wobei dieser Low-Zustand durch den Rückkopplungszweig gehalten wird. Der Komparator 34 kann mittels eines Reset-Signals, das dem Reset-Eingang 42 zuführbar ist, wieder in seinen Ausgangspunkt zurückgesetzt werden.

Als Speichermittel 10 kann auch ein D-Flip-Flop vorgesehen sein, an dessen Dateneingang ein High-Pegel ansteht und der Q-Ausgang mit der Anzeige "Fehler Tacho" verknüpft ist. Dem Clock-Eingang dieses D-Flip-Flops muß ein Inverter vorgeschaltet sein, damit aus einem Low-Signal am Ausgang des Grenzwertgebers 6, das signalisiert, daß der Abtastspannungswert der Hilfsspannung $u_{Hilf}$ ~ außerhalb des Spannungswertebereichs $+ U_K$ und $- U_K$ liegt, ein High-Signal am Q-Ausgang des D-Flip-Flops wird, wodurch die Anzeige "Fehler Tacho" angesteuert wird. Ebenfalls kann man als Speichermittel 10 einen Mikroprozessor einer Prozeßsteuerung verwenden, wenn außer einer Ansteuerung der Anzeige "Fehler Tacho" beispielsweise eine Protokollierung oder ein automatischer Eingriff in die vom Prozessor steuernde Steuereinheit vorgenommen werden soll.

In der FIG 5 sind die Phasenspannungen $u_1$, $u_2$ und $u_3$ jeweils in einem Diagramm über der Kreisfrequenz $\omega t$ dargestellt. Wie die FIG 5 zeigt, haben die Phasenspannungen $u_1$, $u_2$ und $u_3$ des Tachogenerators einen trapezförmigen Verlauf. Der konstant verlaufende Bereich dieser Phasenspannungen $u_1$ bis $u_3$ erstreckt sich jeweils über 120° el.. Damit ist erreicht, daß sich die schräg verlaufenden Bereiche der einzelnen Phasenspannungen $u_1$ bis $u_3$ zeitlich nicht überlappen.

In der FIG 6 ist die Hilfsspannung $u_{Hilf}$ in einem Diagramm über der Kreisfrequenz $\omega t$ dargestellt. Diese Hilfsspannungs $u_{Hilf}$ ~ ist durch die Addition der drei Phasenspannungen $u_1$, $u_2$ und $u_3$ entstanden. Dadurch, daß bei einer Antriebsanordnung mit einer dreiphasigen Antriebsmaschine sich der Winkelbereich, in dem die einzelnen Phasenspannungen $u_1$ bis $u_3$ des Tachogenerators konstant verlaufen, über 120° el. erstreckt, ergibt sich ein dreieckförmiger Verlauf der Hilfsspannung $u_{Hilf}$~, deren Amplitude der Amplitude der einzelnen Phasenspannungen $u_1$ bis $u_3$ entspricht. Außerdem sind im Diagramm zwei konstante Spannungen jeweils mit einer konstanten Amplitude $+ U_K$ bzw. $- U_K$ über der Kreisfrequenz $\omega t$ dargestellt. Diese beiden Spannungen $+ U_K$ und $- U_K$ bilden einen Spannungswertebereich.

Das vom Rotorlagegeber erzeugte Rotorlagesignal $u_{Kom}$ ist in einem Diagramm über der Kreisfrequenz $\omega t$ in der FIG 7 dargestellt. Das Rotorlagesignal $u_{Kom}$ ist ein Rechtecksignal, dessen Pegel-Zustand alle 60° el. wechselt. Dadurch wird mit jeder Flanke der Kommutierungszeitpunkt festgelegt.

In FIG 8 ist das Trigger-Abtastsignal $u_T$ in einem Diagramm über der Kreisfrequenz $\omega t$ dargestellt. Auch dieses Trigger-Abtastsignal $u_T$ ist ein Rechtecksignal, wobei zu jedem Kommutierungszeitpunkt, d.h. alle 60° el., das Signal auf High-Pegel springt und in diesem Pegel-Zustand für eine Zeit $T_M$ verharrt. Diese Zeit $T_M$ ist auch als Abtastzeit $T_M$ zu verstehen, in der die Spannungen $u_{Hilf}$ ~ am Grenzwertgeber 6 ansteht, d.h. nur ein Teil der Hilfsspanuing $u_{Hilf}$ ~ steht am Grenzwertgeber 6 an. In den FIG 5 bis 8 sind die Signalverläufe für einen ungestörten Fall, d.h. wenn keine Phasenspannung ausfällt, dargestellt.

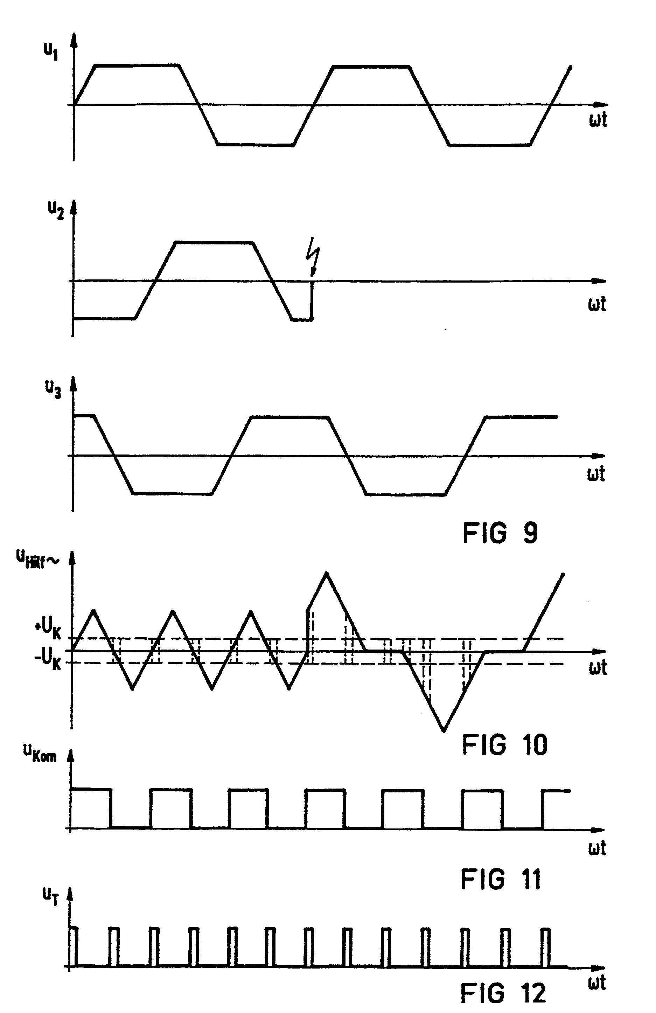

Dagegen zeigen die FIG 9 bis 12 die entsprechenden Signalverläufe der FIG 5 bis 8 für den Fall, daß zu einer Zeit ein Kurzschluß im Tachogenerator auftritt, wodurch die Phasenspannung $u_2$ von diesem Augenblick an fehlt. Vor diesem Zeitaugenblick liegen alle Abtastspannungswerte innerhalb des Spannungswertebereichs $+ U_K$, $- U_K$, wodurch am Ausgang 24 des Grenzwertgebers 6 nach FIG 3 ein High-Signal ansteht. Zum Zeitpunkt des Kurzschlusses macht die Hilfsspannung $u_{Hilf}$ ~ einen Spannungssprung, dem sich dann eine Dreieckspannung anschließt, die swischen zwei Maxima den Wert Null Volt über 60° el. aufweist. Die maximale Amplitude der Hilfsspannung $u_{Hilf}$ ~ ist nun der doppelte Amplitudenwert einer Phasenspannung $u_1$ bzw. $u_3$. Durch den Spannungssprung zum Zeitpunkt des Auftretens des Fehlers liegt der Abtastspannungswert außerhalb des Spannungswertebereichs $+ U_K$, $- U_K$, so daß am Ausgang 24 des Grenzwertgebers 6 nach FIG 3 ein Low-Signal ansteht, wodurch das nachfolgende Speichermittel 10 getriggert wird. Dadurch erscheint am Ausgang des Speichermittels 10 ein Low-Signal bzw. High-Signal in Abhängigkeit der Ausführungsform des Speichermittels 10, wodurch die Anzeige "Fehler Tacho" ansteuert wird.

Durch dieses Verfahren zur Überwachung von phasenverschobenen, über bestimmte Bereiche Konstan-

4

ten Phasenspannungen $u_1$, $u_2$ und $u_3$ eines mehrphasigen Tachogenerators auf Phasenausfall und Schaltungsanordnung zur Durchführung des Verfahrens kann man den Ausfall wenigstens einer Phase innerhalb eines Winkelbereichs 60° el. bzw. 20° mech. feststellen und anzeigen.

**Patentansprüche**

1. Verfahren zur Überwachung von phasenverschobenen, über bestimmte Bereiche Konstanten Phasen-spannungen ($u_1$, $u_2$, $u_3$) eines mehrphasigen Tachogenerators auf Phasenausfall, wobei der Tachogenerator mit einem Rotorlagegeber verbunden ist und diese Phasenspannungen ($u_1$, $u_2$, $u_3$) mittels eines Summierglie-des (2) zu einer Hilfsspannung ($u_{Hilf}$) summiert sind, **dadurch gekennzeichnet**, daß zu jedem durch ein vom Rotorlagegeber erzeugtes Rotorlagesignal ($u_{Kom}$) bestimmten Kommutierungszeitpunkt die Hilfsspannung ($u_{Hilf}$) während einer vorbestimmten Meßzeit ($T_M$) abgetastet und dieser Abtastspannungswert mit einem vorbestimmten Spannungswertebereich ($+ U_K$, $- U_K$) verglichen wird, wobei eine Anzeige "Fehler Tacho" angesteuert wird, sobald ein Abtastspannungswert außerhalb des vorbestimmten Spannungswertebereichs ($+ U_K$, $- U_K$) ist.

2. Schaltungsanordnung zur Durchführung des Verfahrens nach Anspruch 1, wobei die Hilfsspannung ($u_{Hilf}$) am Ausgang eines Summiergliedes (2) ansteht, deren Eingänge jeweils mit einer Phasenspannung ($u_1$, $u_2$, $u_3$) beaufschlagt sind, **dadurch gekennzeichnet**, daß die Hilfsspannung ($u_{Hilf}$) über ein Schaltelement (4) am Eingang (30) eines Grenzwertgebers (6) ansteht, dessen Ausgang (24) ein Speichermittel (10) triggert, dem eine Anzeige "Fehler Tacho" nachgeschaltet ist, und daß das Schaltelement (4) mittels einer flankengesteuerten monostabilen Kippschaltung (8) vom Rotorlagesignal ($u_{Kom}$) steuerbar ist.

3. Schaltungsanordnung nach Anspruch 2, **dadurch gekennzeichnet**, daß als Grenzwertgeber (6) ein Fensterkomparator vorgesehen ist.

4. Schaltungsanordnung nach Anspruch 2, **dadurch gekennzeichnet**, daß als Speichermittel (10) ein Komparator (34) vorgesehen ist, dessen invertierender Eingang mit einem Ausgang eines Spannungsteilers (40) und einem Reset-Eingang (42) und dessen nichtinvertierender Eingang über eine Reihenschaltung, bestehend aus einer Diode (36) und einem Widerstand (38), mit dem Ausgang des Komparators (34) verknüpft sind.

5. Schaltungsanordnung nach Anspruch 2, **dadurch gekennzeichnet**, daß als Speichermittel (10) ein D-Flip-Flop vorgesehen ist, dessen Dateneingang mit einem High-Pegel verknüpft ist.

6. Schaltungsanordnung nach Anspruch 2, **dadurch gekennzeichnet**, daß der Ausgang (24) des Grenzwertgebers (6) mit einem Mikroprozessor verknüpft ist.

**Claims**

1. A method for monitoring loss of phase of phase-displaced phase voltages ($U_1$, $U_2$, $U_3$), constant over certain ranges, of a multiphase tachogenerator, wherein the tachogenerator is connected to a rotor position sensor, and these phase voltages ($U_1$, $U_2$, $U_3$) are added by means of a summing element (2) to an auxiliary voltage ($u_{Hilf}$), characterised in that at each commutation time point, determined by a rotor position signal ($u_{kom}$), generated by a rotor position sensor, the auxiliary voltage ($u_{Hilf}$) scans for a predetermined measuring time ($T_M$) and this scanning voltage value is compared with a predetermined voltage value range ($+ U_K$, $- U_K$), whe-rein a display "error tacho" is triggered as soon as a scanning voltage value range ($+ U_K$, $- U_K$).

2. A circuit arrangement for carrying out the method according to claim 1, wherein the auxiliary voltage ($u_{Hilf}$) stands at the output of a summing element (2), the inputs of which are acted upon in each case by a phase voltage ($u_1$, $u_2$, $u_3$), characterised in that the auxiliary voltage ($u_{Hilf}$) stands at the input (30) of a boundary value generator (6) by way of a switch element (4), the output (24) of which generator triggers a storage means (10), downstream of which there is a display "error tacho", and in that the switch element (4) is able to be controlled by means of an edge-triggered monostable flip-flop (8) by the rotor position signal ($u_{kom}$).

3. A circuit arrangement according to claim 2, characterised in that a window comparator is provided as boundary value generator (6).

4. A circuit arrangement according to claim 2, characterised in that provided as storage means (10) there is a comparator (34), the inverting input of which is connected to an output of a voltage divider (40) and a reset input (42) and the non-inverting input of which is connected, by way of a series connection, consisting of a diode (36) and a resistor (38), to the output of the comparator (34).

5. A circuit arrangement according to claim 2, characterised in that a delay flip-flop is provided as storage means (10), the data input of which is connected to a high level.

6. A circuit arrangement according to claim 2, characterised in that the ouptut (24) of the boundary value generator (6) is connected to a microprocessor.

## Revendications

1. Procédé pour contrôler la défaillance de phase de tensions de phase déphasées ($u_1$, $u_2$, $u_3$), constantes dans une gamme déterminée, d'un générateur tachymétrique polyphasé, selon lequel le générateur tachymétrique est raccordé à un transmetteur de position du rotor et ces tensions de phase ($u_1$, $u_2$, $u_3$) sont additionnées au moyen d'un circuit additionneur (2) pour fournir une tension auxiliaire ($u_{auxiliaire}\sim$), caractérisé par le fait qu'à chaque instant de commutation déterminé par un signal ($u_{Kom}$) de la position du rotor, produite par un transmetteur de position du rotor, la tension auxiliaire ($u_{auxiliaire}\sim$) est explorée pendant une durée de mesure prédéterminée ($T_M$) et cette valeur d'exploration de la tension est comparée à une gamme prédéterminée de valeurs de tension ($+ U_K$, $- U_K$), un dispositif d'affichage "défaut générateur tachymétrique" étant commandé dès qu'une valeur d'exploration de la tension se situe à l'extérieur de la gamme prédéterminée de valeurs de tension ($+ U_K$, $- U_K$).

2. Montage pour la mise en oeuvre du procédé suivant la revendication 1, dans lequel la tension auxiliaire ($u_{auxiliaire}\sim$) est appliquée à la sortie d'un circuit additionneur (2), dont les entrées sont chargées respectivement par une tension de phase ($u_1$, $u_2$, $u_3$), caractérisé par le fait que la tension auxiliaire ($u_{auxiliaire}\sim$) est appliquée, par l'intermédiaire d'un élément de commutation (4), à l'entrée (30) d'un transmetteur (6) de valeur limite, dont la sortie (24) déclenche un dispositif de mémoire (10), en aval duquel est branché un dispositif d'affichage "défaut du générateur tachymétrique", et que l'élément de commutation (4) peut être commandé par le signal ($u_{kom}$) de la position du rotor, au moyen d'un circuit à bascule monostable (8) commandé par les flancs des impulsions.

3. Montage suivant la revendication 2, caractérisé par le fait qu'un comparateur à fenêtre est prévu en tant que transmetteur de valeur limite (6).

4. Montage suivant la revendication 2, caractérisé par le fait qu'il est prévu comme dispositif de mémoire (10) un comparateur (34), dont l'entrée inverseuse est raccordée à une sortie d'un diviseur de tension (40) et une entrée de remise à l'état initial (42), et dont l'entrée non inverseuse est raccordée à la sortie du comparateur (34) par l'intermédiaire d'un circuit série formé d'une diode (36) et d'une résistance (38).

5. Montage suivant la revendication 2, caractérisé par le fait qu'il est prévu comme dispositif de mémoire (10) une bascule bistable de type D, dont l'entrée des données est raccordée à un niveau haut.

6. Montage suivant la revendication 2, caractérisé par le fait que la sortie (24) du transmetteur de valeur limite (6) est raccordée à un microprocesseur.

FIG 1

FIG 2

FIG 3

FIG 4

FIG 5

FIG 6

FIG 7

FIG 8

FIG 9

FIG 10

FIG 11

FIG 12